# DEMANDE DE BREVET EUROPEEN

(11) **EP 4 745 756 A1**
(43) Date de publication de la demande: **20.05.2026**
(21) Numéro de dépôt: 25211754.4
(22) Date de dépôt: 28.10.2025
(51) Int. Cl.: G06F 7/58, G09C 1/00, H04L 9/08

(54) **CIRCUIT INTÉGRÉ ET PROCÉDÉ DE GÉNÉRATION D'UNE CHAÎNE DE DONNÉES SECRÈTE**

(30) Priorité: 13.11.2024 FR 2412363
(71) Demandeur: STMicroelectronics International N.V., 1228 Plan-les-Ouates, Geneva (CH)
(72) Inventeur: LA ROSA, Francesco, 13790 Rousset (FR); FORNARA, Pascal, 83910 Pourrières (FR); MANTELLI, Marc, 13710 Fuveau (FR)
(74) Mandataire: Casalonga

(57) **Abrégé**

Le circuit intégré comporte un circuit de combinaison (CMB) configuré pour générer une chaîne de données secrète (SCRT) combinant une première information numérique (NVM_entrpy_src) et une deuxième information numérique (NVM_ant), et dans un même plan mémoire (MEM_ARR) :
Au moins une première cellule d'entropie (CEL1) est configurée pour fournir la première information numérique (NVM_entrpy_src) déterminée par une fonction physique non-clonable de la première cellule mémoire.

Au moins une deuxième cellule de mémoire (CEL2) est configurée pour fournir la deuxième information numérique (NVM_ant) déterminée par une charge contenue de manière non-volatile dans une grille flottante (FG_ANT) d'un transistor d'état, la grille flottante (FG_ANT) du transistor d'état étant en outre connectée à au moins une piste métallique (ANT) d'une partie d'interconnexion du circuit intégré.

## Description

Des modes de réalisation et de mise en œuvre concernent la génération d'une chaîne de données secrète, et en particulier de protection permettant d'empêcher la récupération de la chaîne de données secrète par des techniques d'ingénierie inversée.

En effet, il existe des techniques, appelées ingénierie inversée, capables de démanteler des circuits intégrés et d'en tirer des observations permettant de reproduire leurs structures et leurs fonctionnements, et notamment d'extraire des données, potentiellement secrètes, enregistrées dans des mémoires non-volatiles.

En effet, les données enregistrées dans des mémoires non-volatiles peuvent être récupérées par des attaques dites « de face arrière », dans lesquelles on parvient à usiner et graver, typiquement par faisceau d'ions focalisé (« FIB » pour « Focused Ion Beam » en anglais), le substrat semiconducteur d'une puce électronique jusqu'à atteindre les régions actives du circuit semiconducteur fonctionnel. Des analyses de microscopie, telles que la microscopie à force atomique (« AFM » pour « Atomic Force Microscopy » en anglais), peuvent alors permettre de mesurer des caractéristiques électriques, telles qu'une valeur capacitive ou un courant, d'un transistor par exemple dans sa région de canal.

Les données enregistrées dans des mémoires non-volatiles sont également vulnérable (récupérable) par des attaques dites « de face avant », dans lesquelles on observe des niveaux de métaux de la partie d'interconnexion de la puce électronique, délaminés successivement par polissages et gravures. La mise à nu des pistes métalliques permet d'y établir des contacts électriques avec des sondes nanométriques (par « nano-probing » en anglais) et de sonder le comportement électrique d'un transistor par exemple.

Les informations obtenues dans ces deux types d'attaques, de face avant ou de face arrière, peuvent permettre d'extraire ou de reconstruire une donnée numérique enregistrée dans une mémoire non-volatile.

Ainsi, il existe un besoin de fournir des moyens permettant de réduire la vulnérabilité aux attaques d'ingénierie inversée des données, dites « secrètes », enregistrées dans une mémoire non-volatile.

A cet égard, il est proposé des modes de réalisation et de mise en œuvre dans lesquels on forme une chaîne de données secrète en combinant une première information numérique détruite et perdue en cas de mise en œuvre d'une attaque de face arrière, et une deuxième information numérique détruite et perdue en cas de mise en œuvre d'une attaque de face avant.

Ainsi, l'une et l'autre des attaques de face arrière ou de face avant résulte à une perte d'une partie du secret, indépendamment du fait qu'elle puisse permettre une extraction d'une autre partie du secret, de sorte qu'il est impossible d'extraire le secret entier.

En d'autres termes, il est proposé non-pas d'empêcher ou rendre difficile la mise en œuvre des attaques de face arrière ou de face avant, mais de les rendre inutiles vis-à-vis du secret.

Selon un aspect, il est proposé à cet égard un circuit intégré comportant un circuit de combinaison configuré pour générer une chaîne de données secrète combinant une première information numérique et une deuxième information numérique, et, dans un même plan mémoire :
- au moins une première cellule d'entropie configurée pour fournir la première information numérique déterminée par une fonction physique non-clonable de la première cellule d'entropie ;
- au moins une deuxième cellule de mémoire configurée pour fournir la deuxième information numérique déterminée par une charge contenue de manière non-volatile dans une grille flottante d'un transistor d'état, la grille flottante du transistor d'état étant en outre connectée à au moins une piste métallique d'une partie d'interconnexion du circuit intégré.

En effet, la première cellule d'entropie pourra ainsi être par exemple fonctionnellement détruite par une attaque de face arrière ; tandis que la deuxième cellule de mémoire est configurée spécifiquement afin de perdre la deuxième information numérique en cas d'attaque de face avant.

En effet, la deuxième cellule de mémoire a un comportement de cellule mémoire non-volatile normale, dans laquelle la deuxième information numérique peut être écrite et lue dans un usage nominal d'une mémoire non-volatile, or toute intervention extérieure sur la piste métallique connecté à la grille flottante affecte irréversiblement la charge de la grille flottante et entraîne la perte de la deuxième information numérique.

Selon un mode de réalisation, la première cellule d'entropie comporte au moins un transistor, et ladite fonction physique non-clonable est issue d'une dérive statistique d'une caractéristique électrique dudit au moins un transistor de la première cellule d'entropie.

Par exemple, la tension de seuil effective d'un transistor est une caractéristique électrique dont la dérive statistique peut fournir une source d'entropie physique non-clonable, apte à déterminer une donnée de la première information numérique.

Selon un mode de réalisation, un circuit de lecture différentiel est configuré pour fournir la première information numérique en détectant la polarité d'une différence entre des courants écoulés par deux premières cellules d'entropie d'une paire identifiée.

Selon un mode de réalisation :
- au moins une troisième cellule de mémoire est configurée pour contenir une troisième information numérique prévue pour identifier et sélectionner, dans le plan mémoire, des premières cellules d'entropie (CEL1) qui garantissent la stabilité et la fiabilité de la première information numérique.

Selon un mode de réalisation :
- ladite au moins une première cellule d'entropie comporte un transistor mono-grille équivalent comprenant une première grille et une deuxième grille superposées et électriquement connectées, et, en série, un transistor d'accès comportant une grille verticale enterrée dans un substrat semiconducteur et une région de conduction implantée en profondeur dans le substrat ;
- ladite au moins une deuxième cellule de mémoire comporte un transistor d'état comprenant une grille flottante et une grille de commande superposées, et, en série, un transistor d'accès comportant une grille verticale enterrée dans un substrat semiconducteur et une région de conduction implantée en profondeur dans le substrat.

Ce type de cellule comportant un transistor d'accès ainsi enterré verticalement en profondeur du substrat engendre une destruction de la fonction de lecture des cellules en cas d'attaque de face arrière. En effet, la lecture est faite par un courant écoulé à travers un chemin de conduction situé dans la profondeur du substrat, et qui est rompu par une attaque de face arrière.

Selon un autre aspect, il est proposé un procédé de génération d'une chaîne de données secrète combinant une première information numérique et une deuxième information numérique, dans lequel :
- la première information numérique est déterminée par une fonction physique non-clonable d'au moins une première cellule d'entropie d'un plan mémoire ;
- la deuxième information numérique est déterminée par une charge contenue de manière non-volatile dans une grille flottante d'un transistor d'état d'au moins une deuxième cellule de mémoire du plan mémoire, la grille flottante étant en outre connectée à au moins une piste métallique d'une partie d'interconnexion du circuit intégré.

Selon un mode de mise en œuvre, ladite fonction physique non-clonable est issue d'une dérive statistique d'une caractéristique électrique d'au moins un transistor de la première cellule d'entropie.

Selon un mode de mise en œuvre, la première information numérique est fournie en détectant la polarité d'une différence entre des courants écoulés par deux premières cellules d'entropie d'une paire identifiée.

Selon un mode de mise en œuvre :
- une troisième information numérique, contenue dans au moins une troisième cellule de mémoire, est prévue pour identifier et sélectionner, dans le plan mémoire, des premières cellules d'entropie qui garantissent la stabilité et la fiabilité de la première information numérique.

Selon un mode de mise en œuvre :
- ladite au moins une première cellule d'entropie comporte un transistor mono-grille équivalent comprenant une première grille et une deuxième grille superposées et électriquement connectées, et, en série, un transistor d'accès comportant une grille verticale enterrée dans un substrat semiconducteur et une région de conduction implantée en profondeur dans le substrat ;
- ladite au moins une deuxième cellule de mémoire comporte un transistor d'état comprenant une grille flottante et une grille de commande superposées, et, en série, un transistor d'accès comportant une grille verticale enterrée dans un substrat semiconducteur et une région de conduction implantée en profondeur dans le substrat.

D'autres avantages et caractéristiques de l'invention apparaîtront à l'examen de la description détaillée de modes de réalisation et de mise en œuvre, nullement limitatifs, et des dessins annexés, sur lesquels les figures :
[Fig.1] ;
[Fig.2] ;
[Fig.3] ;

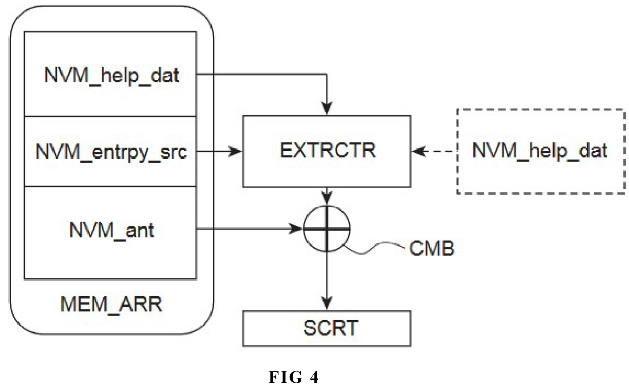

[Fig.4] illustrent des modes de réalisation et de mise en œuvre de l'invention.

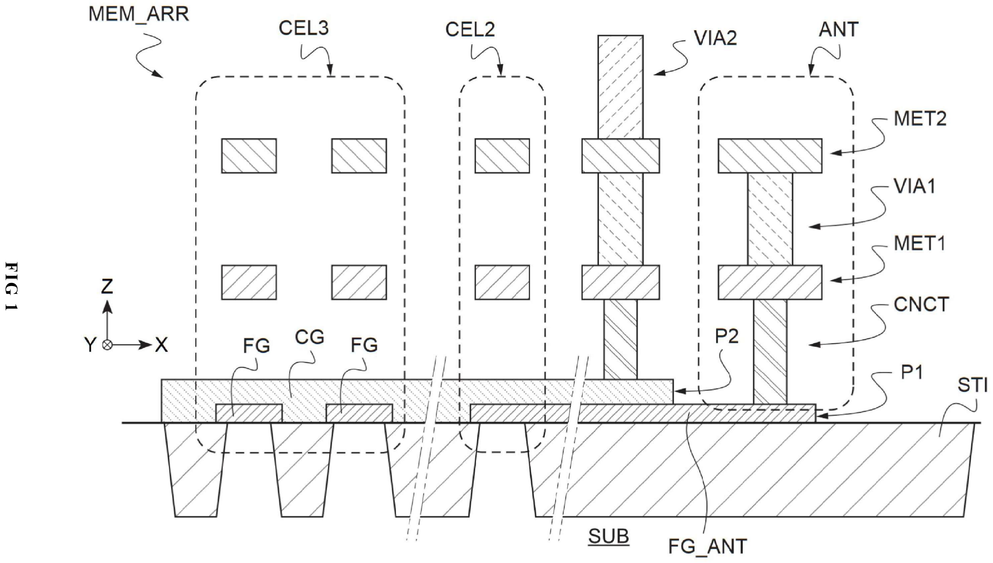

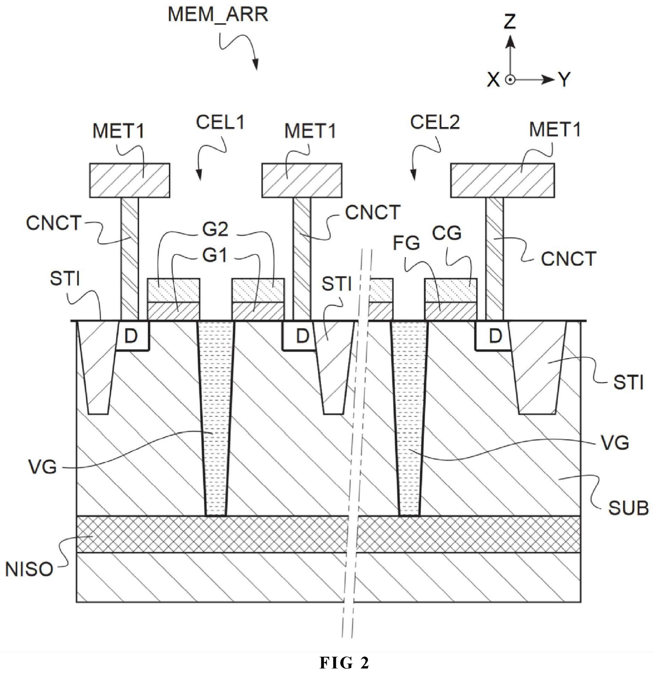

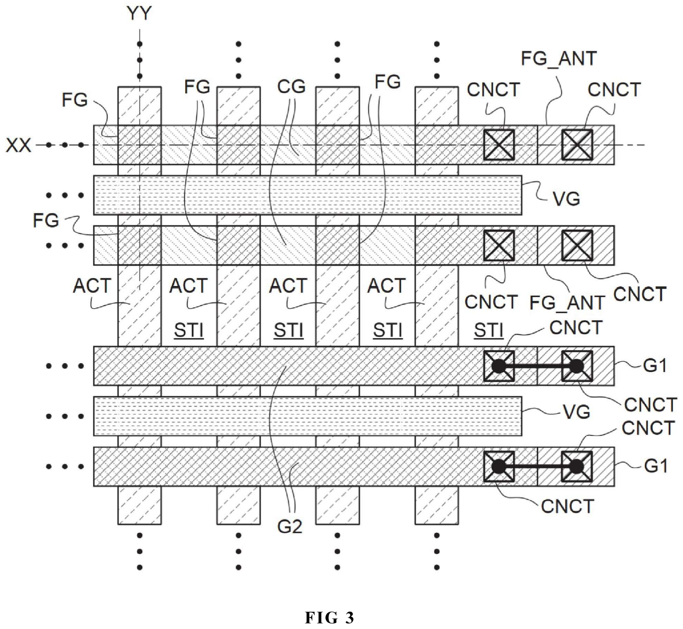

Les figures 1, 2 et 3 illustrent un exemple de circuit intégré comportant un plan mémoire MEM_ARR de mémoire non-volatile, comportant des cellules CEL1, CEL2, CEL3. L'orientation de chaque figure est donnée par un repère orthogonal XYZ commun aux figures 1 2 et 3.

La figure 1 illustre une vue en coupe dans un plan XZ où X est la direction des lignes de mots et des rangées du plan mémoire MEM_ARR, et Z est la direction verticale.

La figure 2 illustre une vue en coupe dans un plan YZ où Y est la direction des lignes de bits et des colonnes du plan mémoire MEM_ARR, et Z est la direction verticale.

La figure 3 illustre une vue du dessus du plan mémoire MEM_ARR, dans un plan XY, sur laquelle le plan de coupe de la figure 1 est positionné par un trait d'axe XX, et sur laquelle le plan de coupe de figure 2 est positionné par un trait d'axe YY.

Les cellules CEL1, CEL2, CEL3 sont structurellement semblables à des cellules-mémoires de mémoire non-volatile. En effet les cellules CEL1, CEL2, CEL3 comprennent chacune un transistor à double grille, du type d'un transistor d'état, comportant une superposition d'une première structure de grille G1 et d'une deuxième structure de grille G2, comprenant typiquement chacune une couche conductrice en silicium polycristallin P1, P2 sur une couche diélectrique, couplé en série avec un transistor d'accès.

Le transistor d'accès comporte quant à lui une grille verticale VG enterrée dans le substrat semiconducteur SUB et une région de conduction implantée en profondeur NISO dans le substrat. La région de conduction NISO est par exemple incorporée dans un plan de source commun à plusieurs cellules.

Parmi les cellules du plan-mémoire MEM_ARR, des (au moins une) premières cellules CEL1, appelées cellules d'entropie, comportent une réalisation d'un transistor mono-grille équivalent, en connectant électriquement ensemble la première grille G1 et la deuxième grille G2 superposées.

Parmi les cellules du plan-mémoire MEM_ARR, des deuxièmes et troisièmes cellules CEL2, CEL3, appelées cellules de mémoire, comportent classiquement un transistor d'état comprenant une grille flottante FG et une grille de commande CG superposées.

Le plan mémoire MEM_ARR est réalisé dans une région du circuit intégré (appelée « FEOL » pour « Front End Of Line » en anglais) située dans et sur une face avant du substrat semiconducteur SUB.

Au-dessus de la région de face avant de la région « FEOL » se trouve une région d'interconnexion du circuit intégré (appelée « BEOL » pour « Back End Of Line » en anglais), comportant des pistes métalliques formées dans des couches successives de niveaux de métaux MET1, MET2 et de via VIA1, VIA2 traversant verticalement des diélectriques inter-métaux.

Le circuit intégré est configuré pour générer une chaîne de données secrète combinant une première information numérique fournie par au moins une première cellule d'entropie CEL1, et une deuxième information numérique fournie par au moins une deuxième cellule de mémoire CEL2, par exemple au moyen d'un circuit de récupération (de la première information numérique) EXTRCTR et d'un circuit de combinaison CMB (figure 4).

Par « information numérique », on entend une chaîne de données numériques, comportant au moins un bit, avantageusement plusieurs bits, par exemple 64 bits, 128 bits 256 bits, ou plus et sans limite particulière selon l'usage de la chaîne de données secrète.

La combinaison de la première information numérique et de la deuxième information numérique peut être par exemple une opération logique « ou-exclusif » bit-à-bit entre tout ou partie de la première information numérique et de la deuxième information numérique.

Dans la suite, on considère que la première information numérique est fournie sur plusieurs bits par plusieurs premières cellules d'entropie CEL1, et de même que la deuxième information numérique est fournie sur plusieurs bits par plusieurs deuxièmes cellules de mémoires CEL2.

Premièrement, les premières cellules d'entropie CEL1 sont configurées de sorte que la première information numérique est perdue irréversiblement en cas de mise en œuvre d'une attaque de face arrière ; c'est-à-dire par exemple une gravure localisée (typiquement par faisceau d'ions focalisé), approchant la face avant du substrat semiconducteur SUB, par l'arrière, à travers le substrat SUB depuis la face du substrat SUB opposée à la face avant.

Deuxièmement, les deuxièmes cellules de mémoires CEL2 sont configurées de sorte que la deuxième information numérique est perdue irréversiblement en cas de mise en œuvre d'une attaque de face avant ; c'est-à-dire par exemple en cas d'atteinte, usuellement par polissages et gravures, dans les niveaux de métaux VIA2, MET2, VIA1, MET1 de la partie d'interconnexion de la puce électronique.

A l'égard du premièrement exprimé ci-avant, les premières cellules d'entropie CEL1 sont configurées pour fournir la première information numérique déterminée par une fonction physique non-clonable de la première cellule mémoire.

Une fonction physique non-clonable (usuellement « PUF » pour « Physical Unclonable Function » en anglais), est un objet physique dont le fonctionnement ne peut pas être reproduit de manière physique, et qui, pour une entrée ou des conditions données (appelées « challenge »), fournit une réponse définie et invariable.

Par exemple, la fonction physique non-clonable est issue d'une dérive statistique d'une caractéristique électrique d'au moins l'un des transistors de la première cellule d'entropie CEL1. Cette caractéristique varie d'une réalisation à une autre de dispositifs structurellement identiques, et n'est pas prévisible ni reproductible. Cependant, cette caractéristique ne varie pas au cours de la vie d'une réalisation donnée.

La caractéristique électrique est avantageusement la tension de seuil effective du transistor monogrille équivalent, réalisé par contact électrique entre la première grille G1 (structurellement semblable à une grille flottante) et la deuxième grille (structurellement semblable à une grille de commande).

Pour que la tension de seuil effective soit discriminante, la mesure peut être effectuée de manière différentielle entre deux cellules d'une paire identifiée de premières cellules d'entropie CEL1.

En effet, un circuit de lecture différentiel peut avantageusement être configuré pour lire le bit (0 ou 1) défini par une paire de premières cellules d'entropie, en commandant les deux cellules dans les mêmes conditions de lectures, et en mesurant la différence entre les courants de lectures écoulés par l'une et l'autre des premières cellules de la paire.

Ainsi, la polarité (c'est-à-dire le signe positif ou négatif) de la différence entre les courants écoulés définira un bit (par exemple respectivement 0 et 1).

Par exemple, si l'intensité du courant de lecture de la première cellule de la paire est supérieure à l'intensité du courant de lecture de la deuxième cellule, alors la paire définit un « 0 » ; et inversement, si l'intensité du courant de lecture de la première cellule de la paire est inférieure à l'intensité du courant de lecture de la deuxième cellule, alors la paire définit un « 1 ».

Le courant de lecture circule sensiblement à partir de la région de source enterrée NISO, par un canal de conduction formé dans le substrat SUB le long de la grille verticale VG du transistor d'accès commandé passant en conditions de lecture, puis par un canal de conduction formé dans le substrat SUB en regard de l'empilement de grilles G1, G2 du transistor équivalent commandé en régime ohmique en conditions de lecture, jusqu'à une région de drain D connectée CNCT à une ligne de bit formée dans un niveau de métal MET1 préchargée à un potentiel de lecture.

En conséquence, toute atteinte à la région du substrat SUB située verticalement entre la région de conduction enterrée NISO et les gilles des transistors des cellules d'entropie CEL1, (mais également les cellules de mémoire CEL2), notamment par faisceau d'ions focalisé (« FIB » pour « Focused Ion Beam » en anglais), portera atteinte au cheminement du courant de lecture et détruira la fonction physique non-clonable des premières cellules d'entropie CEL1.

L'identifications des paires de premières cellules d'entropie CEL1 « fiables », c'est-à-dire fournissant une différence discriminante, peut être mesurée lors d'une phase de test dans la fabrication du circuit intégré, par exemple afin d'exclure des paires ayant par hasard des caractéristiques trop proches pour être discriminées de manière fiable et durable.

Avantageusement, les associations de paires de premières cellules d'entropie CEL1 pourront être faites entre des cellules d'entropie CEL1 spatialement distantes l'une de l'autre.

Une marge de lecture, c'est-à-dire un écart minimal entre les deux intensités mesurées pour être utilisable, pourra aussi être prévue. Les paires de transistors inutilisables, qui ont des tensions de seuil proches l'une de l'autre (et présentent en conséquence des différences de courants de lectures inférieures à l'écart), peuvent être identifiées comme telles, ou simplement ignorées et ne pas faire partie des paires utilisables identifiées.

L'identification des paires fiables de premières cellules d'entropie CEL1, appelée « masque » ou « données d'assistance », pourra être contenue dans une troisième information enregistrée dans une mémoire dédiée NVM_help_dat, par exemple à un emplacement réservé du plan mémoire MEM_ARR.

Ainsi, par exemple au moins une troisième cellule CEL3, du type cellule de mémoire conventionnelle du plan-mémoire MEM_ARR, est configurée pour contenir une troisième information numérique NVM_help_dat prévue pour identifier, parmi les cellules du plan mémoire MEM_ARR, la première information numérique.

A l'égard du deuxièmement exprimé ci-avant, les deuxièmes cellules CEL2, appelées cellules de mémoires, sont configurées pour fournir la deuxième information numérique déterminée par une charge contenue de manière non-volatile dans la grille flottante FG_ANT du transistor d'état.

La grille flottante FG_ANT du transistor d'état de chacune des deuxièmes cellules-mémoire CEL2 est en outre connectée à une structure d'au moins une piste métallique ANT dans la partie d'interconnexion du circuit intégré.

La structure de piste(s) métallique(s) ANT peut être située dans les premiers niveaux de métaux MET1, MET2 de la partie d'interconnexion « BEOL », et peut s'étendre sans limitation particulière dans des niveaux de métaux supérieurs (on peut compter jusqu'à une dizaine de niveaux de métaux par exemple). La structure de piste(s) métallique(s) ANT est elle aussi flottante, c'est-à-dire n'est couplée à aucune tension électrique, de manière à maintenir un potentiel flottant.

En effet, la deuxième cellule mémoire CEL2 peut fonctionner selon un comportement de cellule mémoire non-volatile normale, dans laquelle la deuxième information numérique peut être écrite et lue dans l'usage nominal d'une cellule mémoire non-volatile du plan mémoire MEM_ARR.

Et en outre, la structures de pistes métalliques ANT connectée à la grille flottante FG_ANT agit comme une antenne, apte à prendre le potentiel électrique de tout élément extérieur qui la contacte, et affecte nécessairement la charge de la grille flottante. Ainsi, toute intervention extérieure sur l'une des pistes métalliques ANT connectées à la grille flottante FG_ANT entraîne la perte de la deuxième information numérique.

Ainsi, en résumé, les premières cellules d'entropie CEL1 sont premièrement configurées de sorte que la première information numérique est perdue irréversiblement en cas de mise en œuvre d'une attaque de face arrière ; et, les deuxièmes cellules de mémoires CEL2 sont deuxièmement configurées de sorte que la deuxième information numérique est perdue irréversiblement en cas de mise en œuvre d'une attaque de face avant.

Ainsi, toute tentative de récupération (par « attaque » d'ingénierie inversée) de l'une des deux informations numériques entraine la perte irréversible de l'autre information numérique.

On peut garantir une probabilité d'atteinte réciproque suffisamment grande en positionnant les premières cellules d'entropie CEL1 et les deuxièmes cellules de mémoires CEL2 dans le même plan mémoire MEM_ARR ; par exemple en entrelaçant les positions des premières cellules CEL1 et des deuxièmes cellules CEL2 dans le même plan mémoire MEM_ARR

La figure 4 illustre fonctionnellement la mise en œuvre de la génération de la chaîne de données secrète SCRT protégée contre les attaques d'ingénierie inversée à la fois de face avant et de face arrière.

La chaîne de données secrète SCRT est obtenue par combinaison d'une première information numérique NVM_entrpy_src et d'une deuxième information numérique NVM_ant (par exemple par une opération ou-exclusif). Les informations numériques NVM_entrpy_src, NVM_ant sont fournies par des cellules réalisées dans un même plan mémoire MEM_ARR.

La première information numérique NVM_entrpy_src est déterminée par une fonction physique non-clonable d'au moins une première cellule mémoire, de manière à être perdue irréversiblement en cas de mise en œuvre d'une attaque de face arrière.

La deuxième information numérique NVM_ant est déterminée par une charge contenue de manière non-volatile dans une grille flottante d'un transistor d'état d'au moins une deuxième cellule de mémoire, la grille flottante étant en outre connectée à au moins une piste métallique d'une partie d'interconnexion du circuit intégré, de manière à perdre irréversiblement la deuxième information numérique NVM_ant en cas de mise en œuvre d'une attaque de face avant.

Enfin, une troisième information numérique NVM_help_dat peut être prévue pour identifier et sélectionner, parmi les couples de premières cellules d'entropie CEL1 du plan mémoire, ceux qui garantissent la stabilité et la fiabilité de la première information numérique NVM_entrpy_src.

La troisième information numérique NVM_help_dat permet par exemple de commander les opérations d'un circuit de récupération EXTRCTR afin d'accéder à la première information numérique NVM_entrpy_src.

En effet, le circuit de récupération EXTRCTR, par la lecture de la troisième information numérique NVM_help_dat, sélectionne la partie fiable des premières informations NVM_entrpy_src générées par les premières cellules d'entropie CEL1. Les troisièmes informations NVM_help_dat déterminent ce qui est fiable ou non parmi les premières informations numériques NVM_entrpy_src. Les troisièmes informations NVM_help_dat sont écrites dans qui correspond à une carte identifiant les positions (les adresses) dans le plan-mémoire NVM_ARR des premières cellules d'entropie CEL1 qui peuvent fournir des premières informations numériques NVM_entrpy_src fiables.

De préférence, la troisième information numérique NVM_help_dat est contenue dans des (au moins une) troisièmes cellules de mémoires du même plan mémoire MEM_ARR, mais pourrait aussi être enregistrée dans un autre composant du circuit intégré (représenté en trait interrompu comme une alternative non-préférentielle).

Un circuit de combinaison CMB est configuré pour combiner la première information ainsi récupérée NVM_entrpy_src, avec la deuxième information NVM_ant, par exemple au moyen d'une combinaison ou-exclusif bit à bit entre ladite première information et ladite deuxième information.

## Revendications

1. Circuit intégré comportant un circuit de combinaison (CMB) configuré pour générer une chaîne de données secrète (SCRT) combinant une première information numérique (NVM_entrpy_src) et une deuxième information numérique (NVM_ant), et, dans un même plan mémoire (MEM_ARR) :
- au moins une première cellule, d'entropie (CEL1), configurée pour fournir la première information numérique (NVM_entrpy_src) déterminée par une fonction physique non-clonable de la première cellule d'entropie ;
- au moins une deuxième cellule, de mémoire (CEL2), configurée pour fournir la deuxième information numérique (NVM_ant) déterminée par une charge contenue de manière non-volatile dans une grille flottante (FG_ANT) d'un transistor d'état, la grille flottante (FG_ANT) du transistor d'état étant en outre connectée à au moins une piste métallique (ANT) d'une partie d'interconnexion du circuit intégré.

2. Circuit intégré selon la revendication 1, dans lequel la première cellule d'entropie (CEL1) comporte au moins un transistor, et ladite fonction physique non-clonable est issue d'une dérive statistique d'une caractéristique électrique dudit au moins un transistor de la première cellule d'entropie (CEL1).

3. Circuit intégré selon l'une des revendications 1 ou 2, dans lequel un circuit de lecture différentiel est configuré pour fournir la première information numérique (NVM_entrpy_src) en détectant la polarité d'une différence entre des courants écoulés par deux premières cellules d'entropie d'une paire identifiée.

4. Circuit intégré selon l'une des revendications 1 à 3, dans lequel :
- au moins une troisième cellule, de mémoire (CEL3), est configurée pour contenir une troisième information numérique (NVM_help_dat) prévue pour identifier et sélectionner, dans le plan mémoire (MEM_ARR), des premières cellules d'entropie (CEL1) qui garantissent la stabilité et la fiabilité la première information numérique (NVM_entrpy_src).

5. Circuit intégré selon l'une des revendications 1 à 4, dans lequel
- ladite au moins une première cellule d'entropie (CEL1) comporte un transistor mono-grille équivalent comprenant une première grille (G1) et une deuxième grille (G2) superposées et électriquement connectées, et, en série, un transistor d'accès comportant une grille verticale (VG) enterrée dans un substrat semiconducteur (SUB) et une région de conduction implantée en profondeur (NISO) dans le substrat ;
- ladite au moins une deuxième cellule de mémoire (CEL2) comporte un transistor d'état comprenant une grille flottante (FG) et une grille de commande (CG) superposées, et, en série, un transistor d'accès comportant une grille verticale (VG) enterrée dans le substrat semiconducteur (SUB) et une région de conduction implantée en profondeur (NISO) dans le substrat.

6. Procédé de génération d'une chaîne de données secrète (SCRT) combinant une première information numérique (NVM_entrpy_src) et une deuxième information numérique (NVM_ant), dans lequel :
- la première information numérique (NVM_entrpy_src) est déterminée par une fonction physique non-clonable d'au moins une première cellule d'entropie (CEL1) d'un plan mémoire (MEM_ARR) ;
- la deuxième information numérique (NVM_ant) est déterminée par une charge contenue de manière non-volatile dans une grille flottante (FG_ANT) d'un transistor d'état d'au moins une deuxième cellule de mémoire (CEL2) du plan mémoire (MEM_ARR), la grille flottante (FG_ANT) étant en outre connectée à au moins une piste métallique (ANT) d'une partie d'interconnexion du circuit intégré.

7. Procédé selon la revendication 6, dans lequel ladite fonction physique non-clonable est issue d'une dérive statistique d'une caractéristique électrique d'au moins un transistor de la première cellule d'entropie (CEL1).

8. Procédé selon l'une des revendications 6 ou 7, dans lequel la première information numérique (NVM_entrpy_src) est fournie en détectant la polarité d'une différence entre des courants écoulés par deux premières cellules d'entropie d'une paire identifiée.

9. Procédé selon l'une des revendications 6 à 8, dans lequel :
- une troisième information numérique (NVM_help_dat), contenue dans au moins une troisième cellule de mémoire (CEL3), est prévue pour identifier et sélectionner, dans le plan mémoire (MEM_ARR), des premières cellules d'entropie (CEL1) qui garantissent la stabilité et la fiabilité la première information numérique (NVM_entrpy_src).

10. Procédé selon l'une des revendications 6 à 9, dans lequel :
- ladite au moins une première cellule d'entropie (CEL1) comporte un transistor mono-grille équivalent comprenant une première grille (G1) et une deuxième grille (G2) superposées et électriquement connectées, et, en série, un transistor d'accès comportant une grille verticale (VG) enterrée dans un substrat semiconducteur (SUB) et une région de conduction implantée en profondeur (NISO) dans le substrat ;
- ladite au moins une deuxième cellule de mémoire (CEL2) comporte un transistor d'état comprenant une grille flottante (FG) et une grille de commande (CG) superposées, et, en série, un transistor d'accès comportant une grille verticale (VG) enterrée dans le substrat semiconducteur (SUB) et une région de conduction implantée en profondeur (NISO) dans le substrat.
